# EUROPÄISCHE PATENTANMELDUNG

(11) **EP 4 011 578 A1**
(43) Veröffentlichungstag der Anmeldung: **15.06.2022**
(21) Anmeldenummer: 20212996.1
(22) Anmeldetag: 10.12.2020
(51) Int. Cl.: B26F 1/38, B26D 7/18, B23Q 11/00

(54) **SCHNEIDEMASCHINE MIT VERBESSERTEM ABSAUGSYSTEM**

(71) Anmelder: ZÜND SYSTEMTECHNIK AG, 9450 Altstätten (CH)
(72) Erfinder: Willi, Peter, CH-9490 Altstätten (CH)
(74) Vertreter: Kaminski Harmann

(57) **Zusammenfassung**

Die vorliegende Erfindung betrifft eine Schneidemaschine, aufweisend einen Tisch mit einer Arbeitsfläche, die zur Aufnahme eines zu schneidenden Objekts ausgestaltet ist, eine Brücke, die oberhalb der Arbeitsfläche angeordnet ist, einen Schlitten, der an der Brücke parallel zu einer ersten Horizontalachse positionierbar gelagert ist, eine Werkzeugaufnahme, die am Schlitten parallel zu einer Vertikalachse positionierbar gelagert ist, ein Absaugsystem mit einem Absaugkopf, der am Schlitten oder an der Werkzeugaufnahme angeordnet ist, eine Steuerungseinheit ausgebildet zum Steuern der Schneidemaschine, wobei das Absaugsystem einen ersten Kanal und eine erste Zugangseinrichtung aufweist, wobei der erste Kanal parallel zur ersten Horizontalachse verläuft und dazu eingerichtet ist, ein Absauggerät mit der ersten Zugangseinrichtung zu verbinden, die erste Zugangseinrichtung zur Positionierbarkeit relativ zur Brücke und parallel zur ersten Horizontalachse und dazu eingerichtet ist, den ersten Kanal mit dem Absaugkopf zu verbinden.

## Beschreibung

### GEBIET DER ERFINDUNG

Die vorliegende Erfindung betrifft eine Schneidemaschine zum Schneiden, Kiss-Cutting, Laserbearbeiten, Fräsen, Falzen, Fasen, Beschriften, Rillen, Perforieren, Gravieren, Polieren oder Markieren von Objekten wie Bögen, Folien oder Platten aus Papier, Karton, Kunststoff, Tüchern, Leder oder einem Verbundwerkstoff.

### HINTERGRUND DER ERFINDUNG

Gattungsgemässe Maschinen sind beispielsweise in den Dokumenten EP 1 385 674 B1 und EP 2 488 333 B1 beschrieben. Eine solche Schneidemaschine weist eine Arbeitsfläche auf, die zur Aufnahme mindestens eines Objekts ausgestaltet ist, sowie eine beweglich über der Arbeitsfläche angeordnete Arbeitsgruppe mit einem Messer oder einer anderen Schneidevorrichtung zum Schneiden von auf der Arbeitsfläche befindlichen Objekten. Unter "Schneiden" ist nicht unbedingt ein vollständiges Durchtrennen zu verstehen, sodass ein Schneideprozess ebenso ein Falzen, Fasen, Beschriften, Rillen, Perforieren, Gravieren, Polieren oder Markieren des Objekts oder einen ähnlichen Arbeitsschritt beinhalten kann, der mit einer gattungsgemässen Maschine ausführbar ist.

Ein wesentlicher Aspekt für die Präzision und Fehlerfreiheit solcher Bearbeitungen ist die Entfernung von dabei anfallenden Spänen, Staub, Schnittresten, Schweissrauch oder Kühlmitteln auf dem Objekt oder der Arbeitsfläche. Üblicherweise wird solches Absauggut über ein Absaugsystem entfernt, das einen direkt an der Arbeitsgruppe positionierten Absaugkopf umfasst, von dem aus das Absauggut über einen Schlauch an einen Behälter abtransportiert wird. Eine Problematik dieser bekannten Systeme ist, dass der Schlauch eine an den möglichen Bewegungsbereich der Arbeitsgruppe angepasste Länge aufweisen muss, und dass dieses vielerorts überschüssige Schlauchmaterial stets mittransportiert werden muss. Zudem ist oft eine Schlauchhaltevorrichtung vorhanden, die verhindert, dass der überschüssige Schlauch nicht zur Arbeitsfläche bzw. unter die Arbeitsgruppe gelangt. In manchen Schneidemaschinen werden auch Schleppketten für den Schlauch verwendet. Bei solchen Lösungen versagen aber häufig die Schlauchmaterialien aufgrund der hohen mechanischen Belastung.

Diese Nachteile bewirken hohe Trägheitswiderstände beim Bewegen der Arbeitsgruppe, einen hohen Verschleiss des Schlauchs, Sichteinschränkungen für den Maschinenbediener und eine erhöhte Anfälligkeit für Unfälle.

### AUFGABE DER ERFINDUNG

Daher ist es eine Aufgabe der Erfindung, eine Schneidemaschine mit einem verbesserten Absaugsystem bereitzustellen. Insbesondere verbessert die Erfindung die Schneidemaschine dadurch, dass die zuvor genannten Nachteile überwunden werden.

### ZUSAMMENFASSUNG DER ERFINDUNG

Die vorliegende Erfindung betrifft eine Schneidemaschine, aufweisend einen Tisch mit einer Arbeitsfläche, die zur Aufnahme eines zu schneidenden Objekts ausgestaltet ist, eine Brücke, die oberhalb der Arbeitsfläche angeordnet ist, einen Schlitten, der an der Brücke parallel zu einer ersten Horizontalachse positionierbar gelagert ist, eine Werkzeugaufnahme, die am Schlitten parallel zu einer Vertikalachse positionierbar gelagert ist, ein Absaugsystem mit einem Absaugkopf, der am Schlitten oder an der Werkzeugaufnahme angeordnet ist, eine Steuerungseinheit ausgebildet zum Steuern der Schneidemaschine, wobei das Absaugsystem einen ersten Kanal und eine erste Zugangseinrichtung aufweist, wobei der erste Kanal parallel zur ersten Horizontalachse verläuft und dazu eingerichtet ist, ein Absauggerät mit der ersten Zugangseinrichtung zu verbinden, die erste Zugangseinrichtung zur Positionierbarkeit relativ zur Brücke und parallel zur ersten Horizontalachse und dazu eingerichtet ist, den ersten Kanal mit dem Absaugkopf zu verbinden.

In einer Ausführungsform ist die Arbeitsfläche am Tisch parallel zu einer zweiten Horizontalachse positionierbar gelagert, wobei die zweite Horizontalachse rechtwinklig zur ersten Horizontalachse verläuft, der erste Kanal an oder in der Brücke verläuft und an einem Ende der Brücke das Absauggerät an den ersten Kanal angeschlossen ist.

In einer Ausführungsform ist die Brücke am Tisch parallel zu einer zweiten Horizontalachse positionierbar gelagert, wobei die zweite Horizontalachse rechtwinklig zur ersten Horizontalachse verläuft, das Absaugsystem einen zweiten Kanal, einen dritten Kanal und eine zweite Zugangseinrichtung aufweist, der zweite Kanal parallel zur zweiten Horizontalachse verläuft und dazu eingerichtet ist, das Absauggerät mit der zweiten Zugangseinrichtung zu verbinden, der dritte Kanal dazu eingerichtet ist, die zweite Zugangseinrichtung mit dem ersten Kanal zu verbinden, und die zweite Zugangseinrichtung zur Positionierbarkeit relativ zum Tisch und parallel zur zweiten Horizontalachse eingerichtet ist.

In einer Ausführungsform ist der dritte Kanal strömungsgünstig gerundet ist.

In einer Ausführungsform weist die Brücke zwei Ständer auf, mittels derer die Brücke am Tisch parallel zur zweiten Horizontalachse positionierbar gelagert ist, wobei der dritte Kanal integraler Bestandteil eines der Ständer ist.

In einer Ausführungsform weist der erste Kanal eine erste Öffnung auf, die entlang des ersten Kanals verläuft, wobei das Absaugsystem ein erstes Verschlusselement aufweist, das entlang der ersten Öffnung verläuft, wobei die erste Zugangseinrichtung zwischen dem ersten Verschlusselement und dem ersten Kanal angeordnet ist, sodass die erste Zugangseinrichtung Zugang zum ersten Kanal hat und wobei das erste Verschlusselement dazu eingerichtet ist, die erste Öffnung bis auf diejenige Stelle, an der die erste Zugangseinrichtung momentan positioniert ist, zu verschliessen.

In einer Ausführungsform weist das erste Verschlusselement ein erstes Metallband auf, wobei das erste Metallband und eine Umrandung der ersten Öffnung zum luftdichten Verschliessen der ersten Öffnung dazu eingerichtet sind, eine magnetische Verbindung einzugehen.

In einer Ausführungsform weist die erste Zugangseinrichtung, betrachtet in einer Ebene parallel zur ersten Horizontalachse und senkrecht zu einer flachen Seite des ersten Metallbands, eine Bahn mit glockenartig geformtem Verlauf auf, wobei die Bahn so eingerichtet ist, dass das erste Verschlusselement entlang der Bahn gleiten kann und damit von der ersten Öffnung weggeführt und wieder zur ersten Öffnung hingeführt wird.

In einer Ausführungsform weist die erste Zugangseinrichtung mindestens drei Umlenkelemente auf, die dazu eingerichtet sind, das erste Verschlusselement innerhalb der ersten Zugangseinrichtung zum Abheben von der ersten Öffnung umzulenken.

In einer Ausführungsform ist die Steuerungseinheit ausgebildet zum Steuern einer Saugleistung des Absauggeräts in Abhängigkeit von der Position der ersten Zugangseinrichtung bezüglich der ersten und zweiten Horizontalachse.

In einer Ausführungsform weist die erste Zugangseinrichtung eine erste Mündung auf, die strömungsgünstig ausgerichtet in den ersten Kanal hineinragt.

In einer Ausführungsform ist die erste Zugangseinrichtung starr relativ zum Schlitten angeordnet.

In einer Ausführungsform ist der erste Kanal integraler Bestandteil der Brücke, sodass er die Steifigkeit der Brücke erhöht.

In einer Ausführungsform besteht die erste Zugangseinrichtung aus nichtmagnetischem Material.

In einer Ausführungsform ist an einem Ende des Tisches das Absauggerät an den zweiten Kanal angeschlossen.

In einer Ausführungsform weist der zweite Kanal eine zweite Öffnung auf, die entlang des zweiten Kanals verläuft, wobei das Absaugsystem ein zweites Verschlusselement aufweist, das entlang der zweiten Öffnung verläuft, wobei die zweite Zugangseinrichtung zwischen dem zweiten Verschlusselement und dem zweiten Kanal angeordnet ist, sodass die zweite Zugangseinrichtung Zugang zum zweiten Kanal hat und wobei das zweite Verschlusselement dazu eingerichtet ist, die zweite Öffnung bis auf diejenige Stelle, an der die zweite Zugangseinrichtung momentan positioniert ist, zu verschliessen.

In einer Ausführungsform weist das zweite Verschlusselement ein zweites Metallband auf, wobei das zweite Metallband und eine Umrandung der zweiten Öffnung zum luftdichten Verschliessen der zweiten Öffnung dazu eingerichtet sind, eine magnetische Verbindung einzugehen.

In einer Ausführungsform weist die zweite Zugangseinrichtung, betrachtet in einer Ebene parallel zur zweiten Horizontalachse und senkrecht zu einer flachen Seite des zweiten Metallbands, eine Bahn mit glockenartig geformtem Verlauf auf, wobei die Bahn so eingerichtet ist, dass das zweite Verschlusselement entlang der Bahn gleiten kann und damit von der zweiten Öffnung weggeführt und wieder zur zweiten Öffnung hingeführt wird.

In einer Ausführungsform weist die zweite Zugangseinrichtung mindestens drei Umlenkelemente auf, die dazu eingerichtet sind, das zweite Verschlusselement innerhalb der zweiten Zugangseinrichtung zum Abheben von der zweiten Öffnung umzulenken.

In einer Ausführungsform weist die zweite Zugangseinrichtung eine zweite Mündung auf, die strömungsgünstig ausgerichtet in den zweiten Kanal hineinragt.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine Schneidemaschine gemäss einer Ausführungsform der vorliegenden Erfindung;
Figur 2 zeigt ein Absaugsystem der Schneidemaschine aus Figur 1;
Figur 3 zeigt das Absaugsystem aus Figur 2 in einer Schnittansicht;
Figur 4 zeigt einen Kanal und eine Zugangseinrichtung des Absaugsystems aus Figur 2 aus einer anderen Perspektive;
Figur 5 zeigt die Zugangseinrichtung vom linken Teil der Figur 3 aus einer anderen Perspektive und ohne zugehörigen Kanal;
Figur 6 zeigt die Zugangseinrichtung aus Figur 5 in einer Schnittansicht;
Figur 7 zeigt die Zugangseinrichtung und den Kanal vom linken Teil der Figur 3 in einer Schnittansicht;

### DETAILLIERTE BESCHREIBUNG DER ZEICHNUNGEN

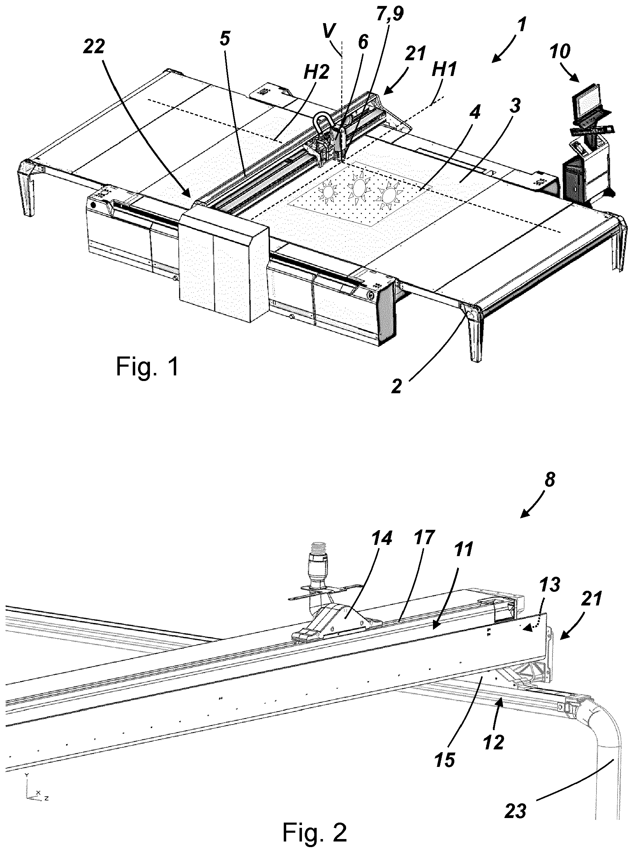

Figur 1 zeigt eine perspektivische Ansicht einer Schneidemaschine 1 gemäss einer Ausführungsform der vorliegenden Erfindung. Die Schneidemaschine 1 weist einen Tisch 2 mit einer Arbeitsfläche 3 auf, wobei die Arbeitsfläche 3 zur Aufnahme eines zu schneidenden Objekts 4 ausgestaltet ist. Im gezeigten Beispiel ist das Objekt 4 eine Schaumplatte mit aufgedruckten Sonnen, die ausgefräst werden sollen. Die Arbeitsfläche 3 kann insbesondere porös ausgebildet sein, wobei unterhalb der Arbeitsfläche 3 ein Unterdruck erzeugbar ist, damit das Objekt 4 durch beim Fräsen oder Schneiden auftretenden Seitenkräften nicht verrutscht.

Die Schneidemaschine 1 weist ferner eine Brücke 5 auf, die oberhalb der Arbeitsfläche 3 angeordnet ist, an der ein Schlitten 6 parallel zu einer ersten Horizontalachse H1 positionierbar gelagert ist. Am Schlitten ist eine Werkzeugaufnahme 7 parallel zu einer Vertikalachse V positionierbar gelagert. Dadurch kann ein eingesetztes Werkzeug zugestellt werden. Im gezeigten Beispiel weist die Brücke 5 zwei Ständer 21 und 22 auf, mittels derer die Brücke 5 am Tisch 2 parallel zu einer zweiten Horizontalachse H2 positionierbar gelagert ist. Die zweite Horizontalachse H2 verläuft insbesondere rechtwinklig zur ersten Horizontalachse H1.

Ein Absaugsystem 8 der Schneidemaschine1 weist einen Absaugkopf 9 auf, der am Schlitten oder an der Werkzeugaufnahme 7 angeordnet ist. Der Absaugkopf 9 ist dazu vorgesehen, möglichst direkt neben derjenigen Stelle Material abzusagen, an der das Objekt 4 gerade bearbeitet wird. Das Absaugkopf 9 kann insbesondere auch in der Werkzeugaufnahme 7 derartig integriert sein, dass rings um die Bearbeitungsstelle abgesaugt wird.

Die Schneidemaschine 1 weist weiterhin eine Steuerungseinheit 10 auf, die ausgebildet ist zum Steuern der Schneidemaschine 1. Die Steuerungseinheit 10 ist kabelgebunden oder kabellos mit einer Schnittstelle der der Schneidemaschine 1 verbunden. So kann die Steuerungseinheit 10 wie gezeigt durch einen neben der Schneidemaschine 1 stehenden Computer vertreten sein, oder auch durch einen Remote Server, der über Internet mit der Schneidemaschine 1 verbunden ist.

Das Absaugsystem 8 weist erfindungsgemäss einen ersten Kanal 11 und eine erste Zugangseinrichtung 14 auf. Der erste Kanal 11 verläuft parallel zur ersten Horizontalachse und ist dazu eingerichtet ist, ein Absauggerät direkt oder indirekt mit der ersten Zugangseinrichtung 14 zu verbinden. Die erste Zugangseinrichtung 14 ist eingerichtet zur Positionierbarkeit relativ zur Brücke 5 und parallel zur ersten Horizontalachse H1. Insbesondere ist die Bewegung der Zugangseinrichtung 14 mit der Bewegung des Schlitten 6 gekoppelt. Die Zugangseinrichtung 14 ist dazu eingerichtet, den ersten Kanal 11 mit dem Absaugkopf 9 zu verbinden. Das Absaugsystem 8 ist derart eingerichtet, dass eine Relativbewegung zwischen der Zugangseinrichtung 14 und dem Kanal 11 ermöglicht ist und der Kanal 11 dennoch zur Umgebung luftdicht verschlossen bleibt.

In manchen Ausführungsformen, die nicht abgebildet sind, steht die Brücke 5 starr relativ zum Tisch 2. Die Arbeitsfläche 3 ist dann am Tisch 2 parallel zur zweiten Horizontalachse H2 positionierbar gelagert, wobei der erste Kanal 11 an oder in der Brücke 5 verläuft und an einem Ende der Brücke 5 das Absauggerät an den ersten Kanal angeschlossen ist. Da in diesem Fall während des Bearbeitungsvorgangs die Brücke 5 nicht bewegt wird, sondern die Bewegung in Richtung der zweiten Horizontalachse H2 von der Arbeitsfläche 3 übernommen wird, kann also das Absauggerät etwa durch einen Schlauch direkt an die Brücke oder einen der Ständer angeschlossen werden.

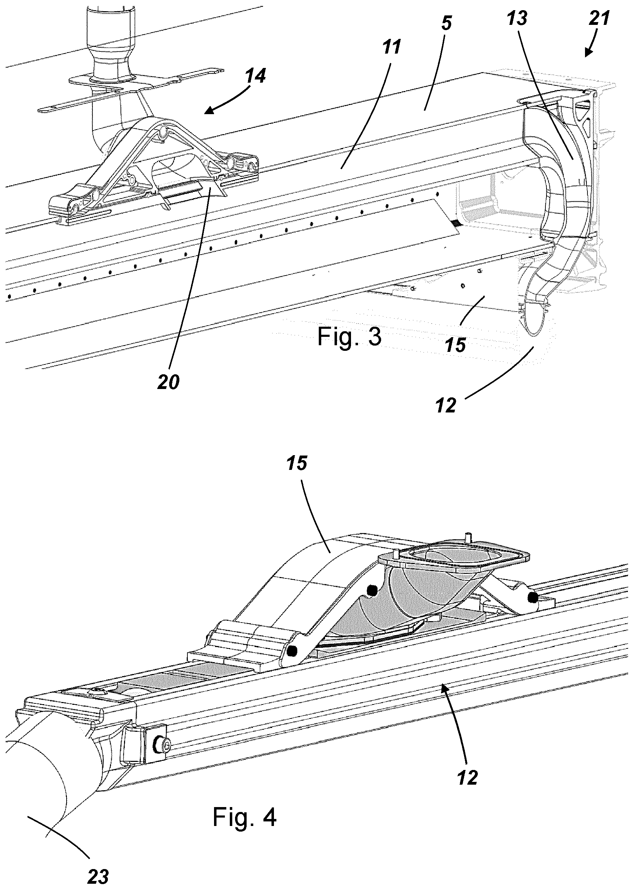

Erfährt die Brücke 5 aber ebenfalls eine Bewegung relativ zur Umgebung, so ist auch für die zweite Horizontalachse H2 das oben beschriebene Prinzip vorteilhaft, um die auf das System wirkenden Trägheitskräfte (etwa durch Schläuche) zu minimieren. In dem Fall weist das Absaugsystem 8 also wie in Figur 2 gezeigt einen zweiten Kanal 12, einen dritten Kanal 13 und eine zweite Zugangseinrichtung 15 auf. Der zweite Kanal 12 verläuft parallel zur zweiten Horizontalachse H2 und ist dazu eingerichtet ist, das Absauggerät direkt oder indirekt mit der zweiten Zugangseinrichtung zu verbinden. Der dritte Kanal 13 ist dazu eingerichtet, die zweite Zugangseinrichtung 15 mit dem ersten Kanal 11 zu verbinden. Der erste Kanal 11 ist insbesondere direkt mit dem dritten Kanal 13 verbunden, wie Figur 3 zeigt.

Die zweite Zugangseinrichtung 15 ist eingerichtet zur Positionierbarkeit relativ zum Tisch und parallel zur zweiten Horizontalachse H2. Insbesondere ist der dritte Kanal 13 integraler Bestandteil eines der Ständer 21 und 22. Insbesondere ist die zweite Zugangseinrichtung 15 direkt und starr mit dem dritten Kanal 13 verbunden, wie Figur 3 zeigt. Die erste Zugangseinrichtung 14 ist bevorzugt ähnlich oder gleich aufgebaut, wie die zweite Zugangseinrichtung 15. Wie in Figur 3 gut zu erkennen ist, kann der dritte Kanal 13 strömungsgünstig gerundet sein, d.h. der Partikel-Luft-Strom wird durch gezielt positionierte Kurven umgelenkt.

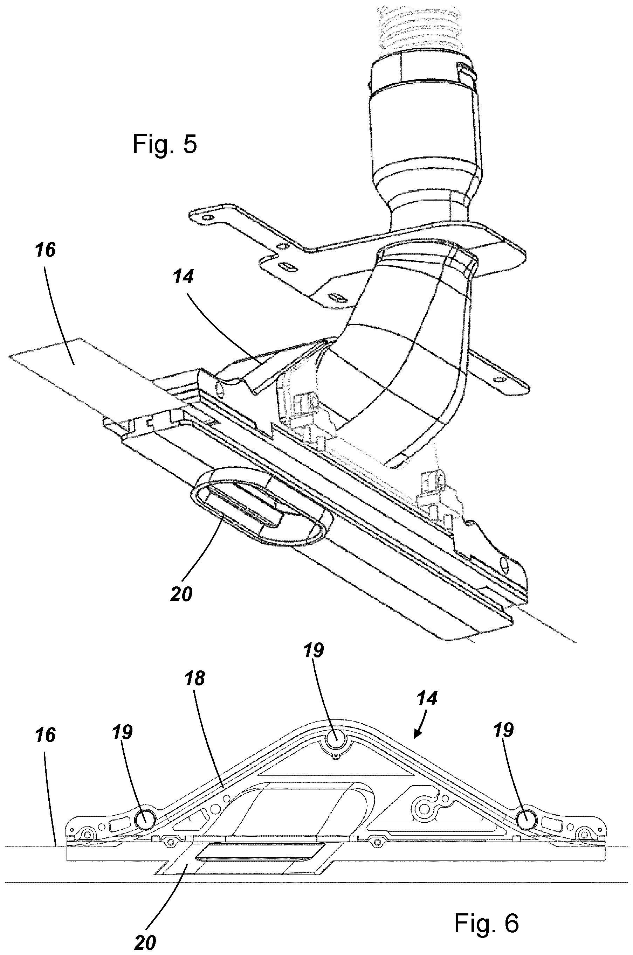

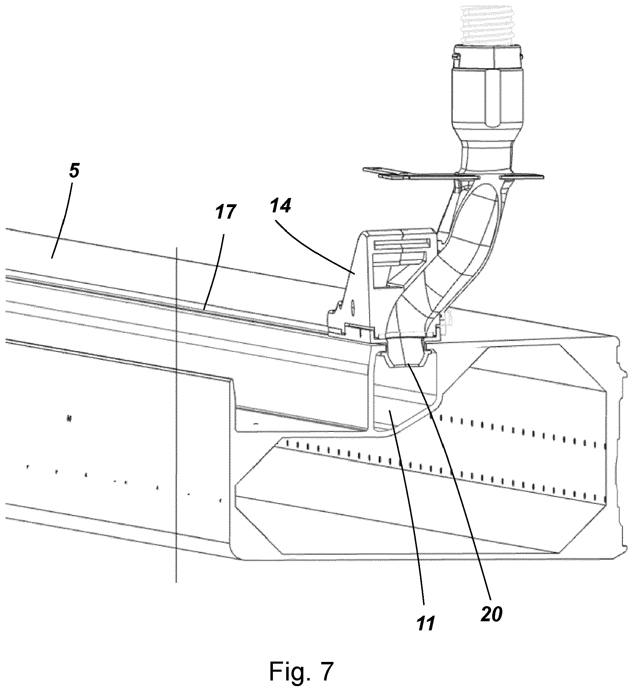

Die Figuren 2 und 7 zeigen auch eine erste Öffnung 17, die entlang des ersten Kanals 11 verläuft. Durch diese Öffnung 17 erhält die erste Zugangseinrichtung 14 Zugang zum ersten Kanal 11. Verschlossen wird die Öffnung 17 (bis auf die Stelle, an der sich die Zugangseinrichtung 14 befindet) durch ein erstes Verschlusselement 16 des Absaugsystems 8, das entlang der ersten Öffnung 17 verläuft und im gezeigten Beispiel wie in Figur 5 zu sehen als Metallband ausgeführt ist. Die erste Zugangseinrichtung 14 ist also stets zwischen dem ersten Verschlusselement 16 und dem ersten Kanal 11 angeordnet, wobei die erste Zugangseinrichtung 14 - betrachtet in einer Ebene, die parallel zur ersten Horizontalachse H1 und senkrecht zu einer flachen Seite des Metallbands 16 ist - eine Bahn 18 mit glockenartig geformtem Verlauf aufweist, wie Figur 6 zeigt. Die Bahn 18 ist dabei so eingerichtet ist, dass das Verschlusselement 16 entlang der Bahn 18 gleiten kann und damit von der ersten Öffnung 17 weggeführt bzw. abgehoben wird und wieder zur Öffnung hingeführt wird, wenn die Zugangseinrichtung 14 weiterverfährt.

Das Metallband 16 und eine Umrandung der ersten Öffnung 17 sind für ein luftdichtes Verschliessen der ersten Öffnung 17 dazu eingerichtet, eine magnetische Verbindung einzugehen. Das heisst, dass entweder das Metallband 16 bzw. der Rand des Metallbands 16 magnetisch ist, oder aber die Umrandung der ersten Öffnung 17. Die erste Zugangseinrichtung 14 ist insbesondere aus nichtmagnetischem Material gefertigt, damit keine Störkräfte auftreten.

Durch mindestens drei Umlenkelemente 19 wird das Verschlusselement 16 innerhalb der ersten Zugangseinrichtung 14 zum Abheben von der Öffnung 17 umgelenkt. Innerhalb der ersten Zugangseinrichtung 14 gelangt eine erste Mündung 20 unter das Verschlusselement 16 und ragt in den Kanal 11 hinein. Von dieser ersten Mündung 20 aus führt ein innerer Verlauf seitlich aus der ersten Zugangseinrichtung 14 hinaus und nach oben, von wo aus beispielsweise ein kurzer Schlauch in die Nähe eines in die Werkzeugaufnahme 7 eingesetzten Werkzeugs führt, siehe Figur 3, 5 und 7.

Die erste Mündung 20 ist insbesondere strömungsgünstig ausgerichtet, sodass der Partikel-Luft-Strom bereits in die richtige Richtung geleitet wird, d.h. in diejenige Richtung entlang des ersten Kanals 11 zeigend, in der sich der dritte Kanal 13 befindet.

Die Steuerungseinheit 10 ist in manchen Ausführungsformen ausgebildet zum Steuern einer Saugleistung des Absauggeräts in Abhängigkeit von der jeweiligen Position der ersten Zugangseinrichtung 14 bezüglich der ersten und zweiten Horizontalachse H1 und H2. Das heisst, wenn der Schlitten 6 bzw. die erste Zugangseinrichtung 14 sich momentan an einer Stelle befindet, an welcher der Weg zum Absauggerät relativ gross ist (etwa gemäss Figur 1 ganz links unten) kann vorteilhaft die Saugleistung erhöht werden, um den längeren Weg auszugleichen. Bei einem verkürzten Weg des Partikel-Luft-Stroms kann die Saugleistung gedrosselt werden.

Bevorzugt ist die erste Zugangseinrichtung 14 starr relativ zum Schlitten 6 angeordnet, aber in anderen Ausführungsformen kann die erste Zugangseinrichtung 14 auch unabhängig vom Schlitten 6 entlang des ersten Kanals 11 bewegt werden, wobei dann die erste Zugangseinrichtung 14 über einen kurzen Schlauch mit dem Schlitten 6 bzw. der Werkzeugaufnahme 7 verbunden ist zwecks Weiterleitung zum Absaugkopf 9.

Um die Verwindungssteifigkeit der Brücke 5 zu steigern, kann der erste Kanal 11 wie in den Figuren gezeigt integraler Bestandteil der Brücke 5 sein. Auch kann zumindest ein Teil der Brücke in bestimmten Ausführungsbeispielen aus einem Faserverbundwerkstoff gefertigt sein, um die bewegten Massen zu reduzieren und die Steifigkeit zu steigern.

Wie in den Figuren 2 und 4 zu sehen kann in einer solchen Ausführungsform mit zwei Kanälen und Zugangseinrichtungen an einem Ende des Tisches 2 das Absauggerät über das Rohr 23 an den zweiten Kanal 12 angeschlossen sein. Ausführungsbeispiele der Schneidemaschine, in denen es einen zweiten Kanal 12 und eine zweite Zugangseinrichtung 15 gibt, weisen insbesondere eine zweite Öffnung des Kanals, ein zweites Verschlusselement und/oder eine zweite Mündung auf, wobei diese jeweils der hierin beschriebenen ersten Öffnung des Kanals, dem ersten Verschlusselement respektive der ersten Mündung gleichen, das heisst es wird das gleiche Prinzip angewendet.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Schneidemaschine (1), aufweisend
einen Tisch (2) mit einer Arbeitsfläche (3), die zur Aufnahme eines zu schneidenden Objekts (4) ausgestaltet ist,
eine Brücke (5), die oberhalb der Arbeitsfläche angeordnet ist,
einen Schlitten (6), der an der Brücke parallel zu einer ersten Horizontalachse (H1) positionierbar gelagert ist,
eine Werkzeugaufnahme (7), die am Schlitten parallel zu einer Vertikalachse (V) positionierbar gelagert ist,
ein Absaugsystem (8) mit einem Absaugkopf (9), der am Schlitten oder an der Werkzeugaufnahme angeordnet ist,
eine Steuerungseinheit (10) ausgebildet zum Steuern der Schneidemaschine,
**dadurch gekennzeichnet, dass** das Absaugsystem einen ersten Kanal (11) und eine erste Zugangseinrichtung (14) aufweist, wobei
der erste Kanal parallel zur ersten Horizontalachse verläuft und dazu eingerichtet ist, ein Absauggerät mit der ersten Zugangseinrichtung zu verbinden,
die erste Zugangseinrichtung zur Positionierbarkeit relativ zur Brücke und parallel zur ersten Horizontalachse und dazu eingerichtet ist, den ersten Kanal mit dem Absaugkopf zu verbinden.

2. Schneidemaschine (1) gemäss Anspruch 1, wobei
die Arbeitsfläche (3) am Tisch (2) parallel zu einer zweiten Horizontalachse (H2) positionierbar gelagert ist, wobei die zweite Horizontalachse rechtwinklig zur ersten Horizontalachse (H1) verläuft,
der erste Kanal (11) an oder in der Brücke (5) verläuft und
an einem Ende der Brücke (5) das Absauggerät an den ersten Kanal angeschlossen ist.

3. Schneidemaschine (1) gemäss Anspruch 1, wobei
die Brücke (5) am Tisch (2) parallel zu einer zweiten Horizontalachse (H2) positionierbar gelagert ist, wobei die zweite Horizontalachse rechtwinklig zur ersten Horizontalachse (H1) verläuft,
das Absaugsystem (8) einen zweiten Kanal (12), einen dritten Kanal (13) und eine zweite Zugangseinrichtung (15) aufweist,
der zweite Kanal parallel zur zweiten Horizontalachse verläuft und dazu eingerichtet ist, das Absauggerät mit der zweiten Zugangseinrichtung zu verbinden,
der dritte Kanal dazu eingerichtet ist, die zweite Zugangseinrichtung mit dem ersten Kanal zu verbinden, und
die zweite Zugangseinrichtung zur Positionierbarkeit relativ zum Tisch und parallel zur zweiten Horizontalachse eingerichtet ist.

4. Schneidemaschine (1) gemäss Anspruch 3, wobei der dritte Kanal (13) strömungsgünstig gerundet ist.

5. Schneidemaschine (1) gemäss Anspruch 3 oder 4, wobei die Brücke (5) zwei Ständer (21,22) aufweist, mittels derer die Brücke am Tisch (2) parallel zur zweiten Horizontalachse (H2) positionierbar gelagert ist, wobei der dritte Kanal integraler Bestandteil eines der Ständer ist.

6. Schneidemaschine (1) gemäss einem der vorangehenden Ansprüche, wobei
der erste Kanal (11) eine erste Öffnung (17) aufweist, die entlang des ersten Kanals verläuft,
das Absaugsystem (8) ein erstes Verschlusselement (16) aufweist, das entlang der ersten Öffnung verläuft,
die erste Zugangseinrichtung (14) zwischen dem ersten Verschlusselement und dem ersten Kanal angeordnet ist, sodass die erste Zugangseinrichtung Zugang zum ersten Kanal (11) hat und
das erste Verschlusselement dazu eingerichtet ist, die erste Öffnung bis auf diejenige Stelle, an der die erste Zugangseinrichtung momentan positioniert ist, zu verschliessen.

7. Schneidemaschine (1) gemäss Anspruch 6, wobei
das erste Verschlusselement ein erstes Metallband aufweist und
das erste Metallband (16) und eine Umrandung der ersten Öffnung zum luftdichten Verschliessen der ersten Öffnung dazu eingerichtet sind, eine magnetische Verbindung einzugehen.

8. Schneidemaschine (1) gemäss Anspruch 7, wobei
die erste Zugangseinrichtung, betrachtet in einer Ebene parallel zur ersten Horizontalachse (H1) und senkrecht zu einer flachen Seite des ersten Metallbands (16), eine Bahn (18) mit glockenartig geformtem Verlauf aufweist und
die Bahn so eingerichtet ist, dass das erste Verschlusselement (16) entlang der Bahn gleiten kann und damit von der ersten Öffnung (17) weggeführt und wieder zur ersten Öffnung hingeführt wird.

9. Schneidemaschine (1) gemäss Anspruch 8, wobei die erste Zugangseinrichtung (14) mindestens drei Umlenkelemente (19) aufweist, die dazu eingerichtet sind, das erste Verschlusselement (16) innerhalb der ersten Zugangseinrichtung zum Abheben von der ersten Öffnung (17) umzulenken.

10. Schneidemaschine (1) gemäss einem der vorangehenden Ansprüche, wobei die Steuerungseinheit (10) ausgebildet ist zum Steuern einer Saugleistung des Absauggeräts in Abhängigkeit von der Position der ersten
Zugangseinrichtung (14) bezüglich der ersten und zweiten Horizontalachse.

11. Schneidemaschine (1) gemäss einem der vorangehenden Ansprüche, wobei die erste Zugangseinrichtung (14) eine erste Mündung (20) aufweist, die strömungsgünstig ausgerichtet in den ersten Kanal (11) hineinragt.

12. Schneidemaschine (1) gemäss einem der vorangehenden Ansprüche, wobei die erste Zugangseinrichtung (14) starr relativ zum Schlitten (6) angeordnet ist.

13. Schneidemaschine (1) gemäss einem der vorangehenden Ansprüche, wobei der erste Kanal (11) integraler Bestandteil der Brücke (5) ist, sodass er die Steifigkeit der Brücke erhöht.

14. Schneidemaschine (1) gemäss einem der vorangehenden Ansprüche, wobei die erste Zugangseinrichtung (14) aus nichtmagnetischem Material besteht.

15. Schneidemaschine (1) gemäss einem der Ansprüche 3 bis 14, wobei an einem Ende des Tisches (2) das Absauggerät an den zweiten Kanal (12) angeschlossen ist.
